# EUROPEAN PATENT SPECIFICATION

(11) **EP 4 360 904 B1**
(45) Date of publication and mention of the grant of the patent: **13.05.2026**
(21) Application number: 22827986.5
(22) Date of filing: 22.03.2022
(51) Int. Cl.: B60C 1/00, C08K 5/47, C08L 7/00, C08L 9/00, C08L 21/00, C08L 61/10, C08K 3/08, B60C 9/00, B60C 9/20

(54) **TIRE**
REIFEN
PNEU

(30) Priority: 22.06.2021 JP 2021103117; 24.11.2021 JP 2021190238
(43) Date of publication of application: 01.05.2024
(73) Proprietor: BRIDGESTONE CORPORATION, Chuo-ku Tokyo 104-8340 (JP)
(72) Inventor: DOHATA, Yuki, Tokyo 104-8340 (JP); ONOUE, Shingo, Tokyo 104-8340 (JP); SAITO, Kosuke, Tokyo 104-8340 (JP)
(74) Representative: Marks & Clerk LLP
(86) International application number: PCT/JP2022/013114
(87) International publication number: WO 2022/270066

(56) References cited:
- EP-A1- 2 653 608
- WO-A1-2020/156967
- WO-A1-98/41682
- JP-A- 2003 226 113
- JP-A- 2004 323 662
- JP-A- 2010 179 689
- JP-A- H08 142 607
- JP-A- S52 140 103
- JP-A- S61 196 805
- US-A- 4 545 834

## Description

### TECHNICAL FIELD

This disclosure relates to a tire.

### BACKGROUND

In a tire, a reinforcement layer obtained by covering a reinforcing material such as a metal cord with rubber is generally arranged as a belt on the inside of a tread surface of the tire in the tire radial direction and on the outside of a crown portion of a carcass in the tire radial direction to improve the durability of the tire (see JP 2017-31240 A (PTL 1)).

When manufacturing a tire, a reinforcing material-rubber composite is usually prepared in advance by covering a reinforcing material with rubber, and in a green tire molding process, the reinforcing material-rubber composite is laminated together with another rubber member to be incorporated into a green tire, and then a vulcanization process is performed to obtain a part of a tire (reinforcement layer).

Further, WO/2020/156967 A1 (PTL 2) describes a steel cord with a brass coating enriched with iron particles that allows the use of tertiary alloy coating even with a cobalt-free compound.

### CITATION LIST

### Patent Literature

PTL 1: JP 2017-31240 A
PTL 2: WO/2020/156967 A1

### SUMMARY

### (Technical Problem)

However, the tire vulcanization process of PTL 1 requires to perform vulcanization at as high a temperature as possible for a short time to improve the productivity of tire. When a green tire including a reinforcing material-rubber composite as a belt (reinforcement layer), where the reinforcing material-rubber composite is obtained using a covering rubber conventionally used for belts, is molded and vulcanized at high temperatures, a portion of the belt (reinforcement layer) where vulcanization progresses quickly (especially the central portion in the tire width direction of the belt) is greatly advanced in vulcanization, passing a proper vulcanization state and becoming over-vulcanized. Then, when it is over-vulcanized, the modulus of the portion where vulcanization progresses quickly decreases, which results in a variation of modulus over the entire belt. When the variation of modulus of the belt is large, the tire performance deteriorates. Therefore, there has been a limit in improving the productivity of the tire by increasing the vulcanization temperature.

Further, PTL 2 does not mention the productivity of the tire.

It could thus be helpful to provide a tire with a high modulus and excellent productivity.

### (Solution to Problem)

A tire including a reinforcement layer including a reinforcing material and a vulcanized rubber covering the reinforcing material, where
the vulcanized rubber is a vulcanized rubber of a rubber composition containing N-cyclohexyl-2-benzothiazolylsulfenamide,
the content of N-cyclohexyl-2-benzothiazolylsulfenamide is 0.4 parts by mass or more and 3 parts by mass or less with respect to 100 parts by mass of the rubber component,
the reinforcing material contains a metal where a steel cord surface is covered with a ternary plating of copper, zinc, and iron,
the reinforcement layer is arranged on the inside of a tread surface in the tire radial direction, and
a ratio (a/b) of a modulus (a) at 50 % elongation of the vulcanized rubber covering the reinforcing material in the central portion of the reinforcement layer in the tire width direction, measured by a tensile test at room temperature (25 °C) according to JIS K6251:2017, and a modulus (b) at 50 % elongation of the vulcanized rubber covering the reinforcing material in the end portion of the reinforcement layer in the tire width direction, measured by a tensile test at room temperature (25 °C) according to JIS K6251:2017, is 0.94 or more and 1.06 or less.

The tire of the present disclosure is excellent in productivity because the modulus of the vulcanized rubber covering the reinforcing material is uniform in the reinforcement layer and vulcanization can be performed at high temperatures for a short time.

### (Advantageous Effect)

According to the present disclosure, it is possible to provide a tire with a high modulus and excellent productivity.

### BRIEF DESCRIPTION OF THE DRAWINGS

In the accompanying drawings:

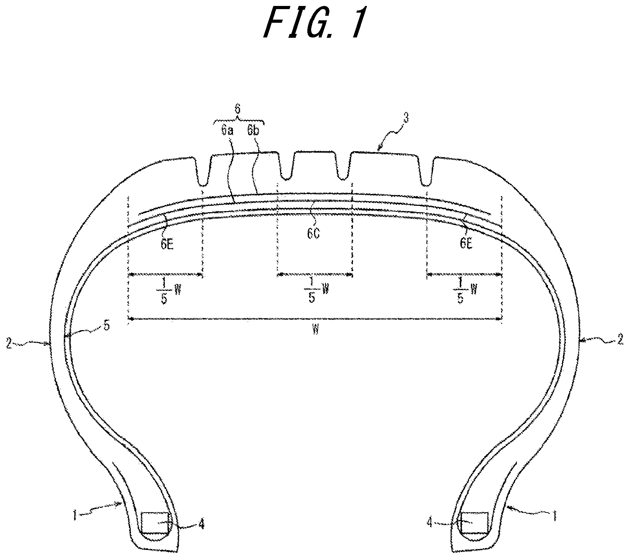

FIG. 1 is a cross-sectional view of an embodiment of a tire of the present disclosure.

### DETAILED DESCRIPTION

The following describes the present disclosure in detail based on the embodiments. In the following description, the description of "A to B" indicating a numerical range represents a numerical range including A and B which are end points, and it represents "A or more and B or less" (when A<B), or "A or less and B or more" (when A>B).

Further, "part by mass" and "% by mass" have the same meaning as "part by weight" and "% by weight", respectively.

### <Tire>

A tire of the present disclosure includes a reinforcement layer including a reinforcing material and a vulcanized rubber covering the reinforcing material, where the vulcanized rubber is a vulcanized rubber of a rubber composition containing N-cyclohexyl-2-benzothiazolylsulfenamide, the content of N-cyclohexyl-2-benzothiazolylsulfenamide is 0.4 parts by mass or more and 3 parts by mass or less with respect to 100 parts by mass of the rubber component, the reinforcing material contains a metal where a steel cord surface is covered with a ternary plating of copper, zinc and iron, the reinforcement layer is arranged on the inside of a tread surface in the tire radial direction, and a ratio (a/b) of a modulus (a) at 50 % elongation of the vulcanized rubber covering the reinforcing material in the central portion of the reinforcement layer in the tire width direction and a modulus (b) at 50 % elongation of the vulcanized rubber covering the reinforcing material in the end portion of the reinforcement layer in the tire width direction is 0.94 or more and 1.06 or less.

The tire of the present disclosure includes a metal in which a steel cord surface is covered with a ternary plating of copper, zinc and iron as a reinforcing material, and the metal has excellent adhesion between vulcanized rubber and metal. Further, in the reinforcement layer, the physical properties of the vulcanized rubber are uniform because the vulcanized rubber covering the cord contains N-cyclohexyl-2-benzothiazolylsulfenamide as a vulcanization accelerator. This suppresses reversion due to over-vulcanization, rendering it possible to perform vulcanization at high temperatures for a short time, thereby achieving excellent productivity.

In the present disclosure, the "tread surface" refers to an outer peripheral surface over the circumference of a tire that comes into contact with a road surface when a tire mounted on an applicable rim and filled with a prescribed internal pressure is turned while having a load corresponding to the maximum load capability applied thereto.

The term "applicable rim" refers to a standard rim in an applicable size described in an industrial standard that is valid in a region where the tire is produced and used, such as the JATMA YEAR BOOK of JATMA (The Japan Automobile Tyre Manufacturers Association, Inc.) in Japan, the STANDARDS MANUAL of ETRTO (The European Tyre and Rim Technical Organisation) in Europe, and the YEAR BOOK of TRA (The Tire and Rim Association, Inc.) in the United States (the measuring rim in ETRTO's STANDARDS MANUAL, and the design rim in TRA's YEAR BOOK). The "prescribed internal pressure" refers to the internal air pressure corresponding to the maximum load capability for each applicable size and ply rating prescribed by the aforementioned JATMA YEAR BOOK and the like. The "maximum load capability" refers to the maximum mass which is permitted to be loaded on a tire, prescribed for the tire by the aforementioned standards.

In the present disclosure, the central portion of the reinforcement layer in the tire width direction refers to a 1/5 portion located in the center in the tire width direction when the reinforcement layer is equally divided into 5 portions in the tire width direction in a plane parallel to the tire equatorial plane, and the end portions of the reinforcement layer in the tire width direction refer to a pair of 1/5 portions located at the two outermost sides in the tire width direction when the reinforcement layer is equally divided into 5 portions in the tire width direction in a plane parallel to the tire equatorial plane.

The following describes the tire of the present disclosure in detail based on an embodiment.

FIG. 1 is a cross-sectional view of an embodiment of the tire of the present disclosure. The tire of the present embodiment illustrated in FIG. 1 includes a pair of bead portions 1, a pair of sidewall portions 2, a tread portion 3, and a carcass 5 extending in a toroidal shape between bead cores 4 embedded in the bead portions 1, and it further includes a belt 6 including two reinforcement layers 6a and 6b in the tread portion 3 on the inside of a tread surface in the tire radial direction and on the outside of a crown portion of the carcass 5 in the tire radial direction.

In the tire of the present embodiment, the carcass 5 is composed of one carcass ply and includes a body portion extending in a toroidal shape between a pair of bead cores 4 which are embedded in the bead portions 1, respectively, and a folded portion which is wound radially outwardly from the inside toward the outside in the tire width direction around each bead core 4. However, the number of plies and the structure of the carcass 5 in the tire of the present disclosure is not limited thereto. The carcass is preferably a radial carcass from the viewpoint of the durability of the tire. The carcass ply constituting the carcass 5 is obtained by covering multiple reinforcing cords with a covering rubber, where the reinforcing cords may be organic fiber cords such as polyethylene terephthalate cords, nylon cords, rayon cords and aramid cords, or steel cords.

In the tire of the present embodiment illustrated in FIG. 1, the tread portion 3 includes reinforcement layers 6a and 6b including a reinforcing material and a vulcanized rubber covering the reinforcing material, where the reinforcement layers 6a and 6b are arranged on the inside of the tire tread surface in the tire radial direction.

The vulcanized rubber covering the reinforcing material (hereinafter sometimes simply referred to as "covering rubber") is a rubber obtained by vulcanizing a rubber composition containing a rubber component. The rubber composition may further contain a filler, a vulcanization accelerator, and the like, and details thereof will be described later. The rubber composition of the covering rubber is sometimes referred to as the rubber composition for covering rubber.

The reinforcing material includes at least a metal where a steel cord surface is covered with a ternary plating of copper, zinc and iron (ternary plated metal). The reinforcing material may further include metals other than steel, such as iron, stainless steel, lead, aluminum, copper, brass, bronze, Monel metal, nickel, and zinc. The diameter of the steel cord is appropriately selected depending on the application of the tire and the like.

The steel cord may be either a steel monofilament or a steel multifilament (twisted cord or aligned bundled cord), the shape of which is not limited. There is no particular limitation on the twist structure when the steel cord is a twist cord, and examples thereof include a twist structure such as single twist, double twist, layer twist, and a composite twist of double twist and layer twist.

Since the steel cord has a ternary plating layer of copper, zinc and iron, the components of the plating layer can serve to enhance the adhesion between the rubber and the steel cord. Therefore, even when the content of a cobalt compound in the rubber composition is small (0.01 parts by mass or less with respect to 100 parts by mass of the rubber component), good adhesion can be realized.

From the viewpoint of suitably ensuring adhesion to the rubber composition, the steel cord may be further subjected to surface treatment such as an adhesive treatment. When an adhesive treatment is performed, it is preferably an adhesive treatment using "Chemlok"^{®} (Chemlok is a registered trademark in Japan, other countries, or both) manufactured by Lord, for example.

For example, a steel filament can be used in which the N atoms on the surface are 2 atom% or more and 60 atom% or less, and the Cu/Zn ratio on the surface is 1 or more and 4 or less. In the metal filament 1, the amount of phosphorus contained as an oxide inside the filament's outermost layer up to 5 nm in the radial direction of the filament is 7.0 atom% or less of the total amount excluding the amount of C, for example.

The metal contained in the reinforcing material of the present embodiment is a metal where a steel cord surface is covered with a ternary plating of copper, zinc and iron (ternary plated metal). More specifically, the steel cord of the metal including one or more steel filaments described above is more preferably as follows. The filament includes a steel filament base material and a covering (plating layer) that partially or entirely covers the steel filament base material, the covering contains brass made of copper and zinc, the covering is reinforced with iron, the iron is present as particles in the brass, and the particles have a size of 10 nanometers to 10000 nanometers. The particles more preferably have a size of 20 nanometers to 5000 nanometers. The words "reinforced with iron" mean that the iron is not derived from a filamentary steel substrate.

The brass is preferably composed of copper and zinc, where it contains at least 63 % by mass of copper, with the remainder being zinc. It more preferably contains 65 % by mass or more of copper and even more preferably contains 67 % by mass or more of copper.

The amount of iron in the covering (plating layer) is preferably 1 % by mass or more and less than 10 % by mass with respect to the total mass of brass and iron. The amount of iron in the covering is more preferably 3 % by mass or more and less than 9 % by mass with respect to the total mass of brass and iron.

It is more preferably a steel cord where the covering is substantially free of zinc-iron alloy.

In the steel cord including one or more steel filaments described above, the amount of phosphorus present on the surface of the filament, that is, the amount of phosphorus in the covering (plating layer) is Pₛ, the amount of iron present on the surface of the filament, that is, the amount of iron in the covering (plating layer) is Feₛ, and the amount of (Pₛ+Feₛ) is determined by gently etching the surface of the filament with a weak acid that dissolves phosphorus and iron according to the following methods (a) to (e):
(a) approximately 5 grams of the steel cord is weighed, cut into a piece of approximately 5 cm, and introduced into a test tube;
(b) 10 ml of 0.01mol hydrochloric acid HCl is added;
(c) the sample is shaken with the acid solution for 15 seconds;
(d) the amount present in the solution is measured by ICP-OES, where the ICP-OES refers to optical emission spectroscopy (ICP-OES) using inductively coupled plasma - all standard solutions of (0; 0; 0), (2; 0.02; 1), (5; 0.1; 2), (10; 0.5; 5) mg/L of (Cu; Fe; Zn) in the matrix of a 10 mL stripping solution; and
(e) the mass of (Pₛ+Feₛ) per unit of surface area of the filament steel is indicated as a result in milligrams per square meter (mg/m²). The result is sometimes referred to as (Feₛ+Pₛ).

The amount of phosphorus present on the surface of the filament, that is, the amount of phosphorus in the covering (plating layer) is preferably 4 mg/m² or less and more than 0 in order to improve the adhesiveness. That is, 0<Pₛ ≦ 4 mg/m². The amount of phosphorus (Pₛ) is more preferably less than 4 mg/m² (Pₛ<4 mg/m²).

A large amount of phosphorus Pₛ deteriorates the growth of the adhesive layer. The amount of phosphorus Pₛ may be less than 3 mg/m² and is more preferably less than 1.5 mg/m².

In a more preferred embodiment, the amount of iron present on the surface of the filament is preferably 30 mg/m² or more, more preferably more than 35 mg/m², and even more preferably more than 40 mg/m².

A mass ratio (Feₛ/Pₛ) of the amount of iron present on the surface of the filament and the amount of phosphorus present on the surface of the filament is preferably more than 27.

The filament surface covering mass SCW is the sum of the masses of brass and iron present in the covering per unit of surface area. The covering mass is indicated in grams per square meter, and the mass ratio [Feₛ/(SCW×Pₛ)] is preferably more than 13.

A method of obtaining a steel filament in which the iron is present as particles in the brass may be as follows. An intermediate wire with a brass covering reinforced with iron particles is drawn to a final diameter of 0.28 mm by wet wire drawing where the wire is continuously drawn through smaller dies in lubricant, to obtain the steel filament.

Lubricant generally contains a high-pressure additive containing phosphorus in an organic compound.

The dies used may be Set-D dies where at least the head die is a sintered diamond die, and the remaining die is a tungsten carbide die. The steel cord is preferably drawn by diamond dies.

A method of covering the steel cord with the rubber composition may be as follows, for example.

A predetermined number of steel cords which have been ternary plated are arranged in parallel at a predetermined interval, and the steel cords are coated from both upper and lower sides with an uncross-linked rubber sheet having a thickness of about 0.5mm of the present rubber composition to obtain a precursor. The obtained precursor (unvulcanized rubber-metal composite) is vulcanized. The vulcanization condition may be, for example, at a temperature of about 160 °C for about 20 minutes; or at a temperature of about 145 °C for about 40 minutes.

The composite of the vulcanized rubber and the steel cord thus obtained has excellent vulcanized rubber-metal adhesion.

In the tire of the present embodiment, the cords of the reinforcement layers 6a and 6b are usually laminated so as to cross each other across the tire equatorial plane to form the belt 6. Although the belt 6 in the drawing consists of two reinforcement layers 6a and 6b, the number of reinforcement layers constituting the belt 6 in the tire of the present disclosure may be one or more, and is not limited thereto.

In the tire of the present embodiment, the central portion 6C of the reinforcement layers 6a and 6b in the tire width direction refers to a 1/5 portion located in the center in the tire width direction when the reinforcement layers 6a and 6b are equally divided into 5 portions in the tire width direction in a plane parallel to the tire equatorial plane, and the end portions 6E of the reinforcement layers 6a and 6b in the tire width direction refer to a pair of 1/5 portions located at the two outermost sides in the tire width direction when the reinforcement layers 6a and 6b are equally divided into 5 portions in the tire width direction in a plane parallel to the tire equatorial plane. That is, the central portion 6C of the reinforcement layers 6a and 6b in the tire width direction has a range of 1/5 of the maximum width W of the reinforcement layers 6a and 6b in the tire width direction located at the center in the tire width direction when the reinforcement layers 6a and 6b are equally divided into 5 portions in the tire width direction in a plane parallel to the tire equatorial plane. On the other hand, the end portions 6E of the reinforcement layers 6a and 6b in the tire width direction have a range of 1/5 of the maximum width W of the reinforcement layers 6a and 6b in the tire width direction located on the two outermost sides in the tire width direction, respectively, when the reinforcement layers 6a and 6b are equally divided into 5 portions in the tire width direction in a plane parallel to the tire equatorial plane.

Further, in the tire of the present embodiment, a ratio (a/b) of a modulus (a) at 50 % elongation of the vulcanized rubber covering the reinforcing material in the central portion 6C of the reinforcement layers 6a and 6b in the tire width direction and a modulus (b) at 50 % elongation of the vulcanized rubber covering the reinforcing material in the end portion 6E of the reinforcement layers 6a and 6b in the tire width direction is 0.94 or more and 1.06 or less.

As used herein, the ratio (a/b) of the modulus (a) at 50 % elongation of the covering rubber in the central portion 6C of the reinforcement layers 6a and 6b in the tire width direction and the modulus (b) at 50 % elongation of the covering rubber in the end portion 6E of the reinforcement layers 6a and 6b in the tire width direction being 0.94 or more and 1.06 or less means that the physical properties of the covering rubber of the reinforcement layers 6a and 6b are uniform.

This means that the covering rubber is a vulcanized rubber obtained with a rubber composition that suppresses reversion due to over-vulcanization and that can be vulcanized at high temperatures for a short time. Therefore, the tire of the present embodiment is excellent in productivity.

Examples of methods of setting the ratio (a/b) of the modulus (a) at 50 % elongation of the covering rubber in the central portion 6C of the reinforcement layers 6a and 6b in the tire width direction and the modulus (b) at 50 % elongation of the covering rubber in the end portion 6E of the reinforcement layers 6a and 6b in the tire width direction to 0.94 or more and 1.06 or less includes adjusting the composition of the rubber composition used for the covering rubber of the reinforcement layers 6a and 6b, adjusting the kneading conditions of the rubber composition, and adjusting the vulcanization conditions of the tire. With these methods, the dependence of the modulus of the covering rubber on the vulcanization conditions can be reduced, thereby obtaining a ratio (a/b) of 0.94 or more and 1.06 or less.

### (N-cyclohexyl-2-benzothiazolylsulfenamide)

In the tire of the present embodiment, the vulcanized rubber (covering rubber) covering the reinforcing material is a vulcanized rubber of a rubber composition containing N-cyclohexyl-2-benzothiazolylsulfenamide.

When the rubber composition of the covering rubber (rubber composition for covering rubber) contains N-cyclohexyl-2-benzothiazolylsulfenamide, reversion due to over-vulcanization is suppressed when the rubber composition is vulcanized. As a result, even if the vulcanization process of the rubber composition is completed in a short time at high temperatures, it is easy to make the physical properties of the vulcanized rubber uniform between the central portion 6C of the reinforcement layers 6a and 6b in the tire width direction and the end portion 6E of the reinforcement layers 6a and 6b in the tire width direction, and it is easy to adjust the ratio (a/b) to a range of 0.94 or more and 1.06 or less. Therefore, the high-temperature and short-time vulcanization of the rubber composition is facilitated without deteriorating the performance of the tire, and further, the decrease in the modulus of the tire due to reversion is suppressed. From the above viewpoint, the ratio (a/b) may be in a range of 0.94 or more and 1.03 or less, in a range of 0.94 or more and 1.00 or less, or in a range of 0.94 or more and 0.99 or less.

N-cyclohexyl-2-benzothiazolylsulfenamide is also referred to as "vulcanization accelerator CZ" and "vulcanization accelerator CBS", and it has an effect of accelerating the vulcanization reaction (hereinafter, N-cyclohexyl-2-benzothiazolylsulfenamide may be referred to as "vulcanization accelerator CZ").

The content of N-cyclohexyl-2-benzothiazolylsulfenamide in the rubber composition for covering rubber is 0.4 parts by mass or more, more preferably 0.45 parts by mass or more, more preferably 0.5 parts by mass or more, more preferably 0.55 parts by mass or more, and even more preferably 0.6 parts by mass or more with respect to 100 parts by mass of the rubber component. Further, it is 3 parts by mass or less, more preferably 1.5 parts by mass or less, more preferably 1.4 parts by mass or less, more preferably 1.3 parts by mass or less, more preferably 1.2 parts by mass or less, more preferably 1.1 parts by mass or less, and more preferably 1.0 part by mass or less with respect to 100 parts by mass of the rubber component. When the content of N-cyclohexyl-2-benzothiazolylsulfenamide in the rubber composition for covering rubber is 0.4 parts by mass or more with respect to 100 parts by mass of the rubber component, the effect of accelerating the vulcanization reaction of the rubber composition is improved, and when the content is 3 parts by mass or less with respect to 100 parts by mass of the rubber component, the reduction in modulus due to reversion can be further suppressed.

### (Polyisoprene-based rubber)

Further, 50 % by mass or more of the rubber component is preferably a polyisoprene-based rubber. In other words, 50 % by mass or more of the rubber component of the rubber composition for covering rubber is preferably a polyisoprene-based rubber. When 50 % by mass or more of the rubber component is a polyisoprene-based rubber, the strength of the covering rubber is improved, and the durability of the tire can be improved.

The content of the polyisoprene-based rubber in the rubber component is more preferably 60 % by mass or more, and it may be 100 % by mass (that is, all of the rubber component may be the polyisoprene-based rubber).

The polyisoprene-based rubber includes natural rubber (NR) and synthetic isoprene rubber (IR). The polyisoprene-based rubber may contain only either of natural rubber (NR) and synthetic isoprene rubber (IR) or contain both. However, it is desirably natural rubber (NR).

The rubber composition for covering rubber may contain a rubber other than the above-described polyisoprene-based rubber as a rubber component.

Examples of the rubber other than the polyisoprene-based rubber include synthetic rubbers such as butadiene rubber (BR), styrene-butadiene copolymer rubber (SBR), styrene-isoprene copolymer rubber (SIR), acrylonitrile-butadiene copolymer rubber (NBR), ethylene-propylene copolymer rubber, ethylene-propylene-diene terpolymer rubber, butyl rubber (isobutylene-isoprene copolymer rubber, IIR), halogenated butyl rubber, alkylated chlorosulfonated polyethylene rubber, and chloroprene rubber (CR).

These rubber components may be used alone or in combination of two or more.

### (Cobalt-containing compound)

The rubber composition for covering rubber preferably has a cobalt-containing compound content of 0.01 % by mass or less. When the content of the cobalt-containing compound in the rubber composition for covering rubber is 0.01 % by mass or less, the heat deterioration resistance of the covering rubber can be easily improved.

The content of the cobalt-containing compound in the rubber composition for covering rubber is more preferably 0.005 % by mass or less, and it may be 0 % by mass. Further, a cobalt-containing compound (or cobalt metal or cobalt ions derived from a cobalt compound) may be mixed as an impurity, such as being mixed into the covering rubber from the outside, and it is preferable not to blend a cobalt-containing compound at least during the production of the rubber composition for covering rubber.

### (Alkylphenol resin)

In addition to N-cyclohexyl-2-benzothiazolylsulfenamide, various compounding agents may be blended into the rubber composition for covering rubber. For example, an alkylphenol resin is preferably blended.

When the rubber composition for covering rubber contains an alkylphenol resin, the strength of the vulcanized rubber covering the reinforcing material is improved, and the durability of the tire can be improved. More specifically, the composite of the covering rubber and the reinforcing material (vulcanized rubber-metal composite), that is, the reinforcement layer is hardly deteriorated and obtains better adhesiveness after moist and heat deterioration.

The alkylphenol resin is obtained by a condensation reaction of alkylphenol and formaldehyde under a catalyst. The alkylphenol resin may be a commercially available product, and examples thereof include product name "Hitanol 1502P" (manufactured by Hitachi Chemical Co., Ltd.), product name "TACKIROL 201" (manufactured by Taoka Chemical Co., Ltd.), product name "TACKIROL 250-I" (brominated alkylphenol formaldehyde resin with a bromination rate of 4 %, manufactured by Taoka Chemical Co., Ltd.), product name "TACKIROL 250-III" (brominated alkylphenol formaldehyde resin, manufactured by Taoka Chemical Co., Ltd.), product names "R7521P", "SP1068", "R7510PJ", "R7572P", and "R7578P" (manufactured by Schenectady), and product name "R7510PJ" (manufactured by SI GROUP INC.).

The content of the alkylphenol resin in the rubber composition for covering rubber is preferably 0.2 parts by mass or more, more preferably 0.3 parts by mass or more, more preferably 0.4 parts by mass or more, more preferably 0.5 parts by mass or more, and still more preferably 0.6 parts by mass or more with respect to 100 parts by mass of the rubber component. It is preferably 3 parts by mass or less, more preferably 1.5 parts by mass or less, more preferably 1.4 parts by mass or less, more preferably 1.3 parts by mass or less, more preferably 1.2 parts by mass or less, and still more preferably 1.1 parts by mass or less, with respect to 100 parts by mass of the rubber component. When the content of the alkylphenol resin is 0.2 parts by mass or more with respect to 100 parts by mass of the rubber component, the reinforcement layer hardly deteriorates, and the vulcanized rubber-metal adhesion after moist and heat deterioration is improved. When the content is 3 parts by mass or less, a suitably high elastic modulus and low heat generating properties during the usage of the product can be achieved.

### (Filler)

The rubber composition for covering rubber preferably contains a filler, and the filler is preferably carbon black, silica, or the like. When the rubber composition for covering rubber contains a filler, the strength of the covering rubber is improved, and the durability of the tire is improved.

The carbon black is not particularly limited, and examples thereof include GPF, FEF, HAF, ISAF, and SAF grade carbon black. The silica is not particularly limited and examples thereof include wet silica (hydrated silica), dry silica (anhydrous silica), calcium silicate, and aluminum silicate. Wet silica is preferable among these examples. These fillers may be used alone or in combination of two or more.

It is possible to use carbon black with a nitrogen adsorption specific surface area (N₂SA, measured in accordance with JIS K 6217-2:2001) of 20 m²/g to 250 m²/g, carbon black with a nitrogen adsorption specific surface area of 30 m²/g to 200 m²/g, or carbon black with a nitrogen adsorption specific surface area of 30 m²/g to 150 m²/g as the carbon black.

Further, it is possible to use carbon black with a dibutyl phthalate (DBP) oil absorption (measured with the method described in JIS K 6217-4: 2001 "Determination of DBP absorption") of 50 cm³/100 g to 200 cm³/100 g, or carbon black with a DBP oil absorption of 60 cm³/100 g to 170 cm³/100 g as the carbon black.

The content of the filler in the rubber composition for covering rubber is preferably 30 parts by mass or more, more preferably 35 parts by mass or more, and even more preferably 40 parts by mass or more with respect to 100 parts by mass of the rubber component. Further, it is preferably 120 parts by mass or less, more preferably 100 parts by mass or less, more preferably 80 parts by mass or less, more preferably 70 parts by mass or less, and even more preferably 60 parts by mass or less with respect to 100 parts by mass of the rubber component. When the content of the filler is 30 parts by mass or more with respect to 100 parts by mass of the rubber component, the strength of the covering rubber is further improved, and when the content is 120 parts by mass or less, the processability of the rubber composition for covering rubber is good.

### <Vulcanizing agent>

The rubber composition for covering rubber preferably contains a vulcanizing agent. Examples of the vulcanizing agent include sulfur.

The content of the vulcanizing agent in the rubber composition for covering rubber is preferably 0.1 parts by mass or more, more preferably 1 part by mass or more, more preferably 2 parts by mass or more, more preferably 3 parts by mass or more, and even more preferably 4 parts by mass or more in terms of sulfur content with respect to 100 parts by mass of the rubber component. Further, it is preferably 10 parts by mass or less, more preferably 9 parts by mass or less, more preferably 8 parts by mass or less, and even more preferably 7 parts by mass or less in terms of sulfur content with respect to 100 parts by mass of the rubber component. When the content of the vulcanizing agent is 0.1 parts by mass or more in terms of sulfur content with respect to 100 parts by mass of the rubber component, the strength and other properties of the covering rubber are improved, and when the content is 10 parts by mass or less, the rubber elasticity of the covering rubber can be sufficiently secured.

### (Various compounding agents)

In addition to the rubber component, N-cyclohexyl-2-benzothiazolylsulfenamide (vulcanization accelerator CZ), filler, and vulcanizing agent described above, the rubber composition for covering rubber may contain compounding agents such as an antioxidant, a softening agent, a silane coupling agent, stearic acid, zinc white (zinc oxide), a bismaleimide compound (BMI), a hexamethylene bisthiosulfate disodium salt dihydrate (HTS), a phenolic resin, and a methylene donor, which can be appropriately selected and contained within a range that does not inhibit the effects of the present disclosure. Commercial products may be suitably used as these compounding agents.

### [Stearic acid]

The content of stearic acid in the rubber composition for covering rubber is preferably 0.5 parts by mass or more, more preferably 0.6 parts by mass or more, more preferably 0.7 parts by mass or more, still more preferably 0.8 parts by mass or more, and still more preferably 0.9 parts by mass or more, with respect to 100 parts by mass of the rubber component. Further, it is preferably 3.0 parts by mass or less, more preferably 2.5 parts by mass or less, more preferably 2.3 parts by mass or less, more preferably 2.1 parts by mass or less, and still more preferably 1.9 parts by mass or less, with respect to 100 parts by mass of the rubber component.

### [Zinc white]

The content of zinc white in the rubber composition for covering rubber is preferably 1 part by mass or more, more preferably 2 parts by mass or more, and still more preferably 3 parts by mass or more, with respect to 100 parts by mass of the rubber component. Further, it is preferably 15 parts by mass or less, more preferably 12 parts by mass or less, and still more preferably 10 parts by mass or less, with respect to 100 parts by mass of the rubber component.

### [Bismaleimide compound]

The bismaleimide compound is preferably a compound represented by the following formula (1).

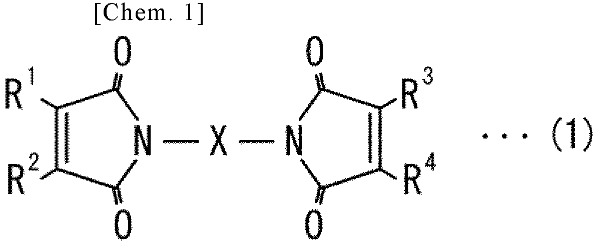

In the formula (1), X represents an alkylene group having 2 to 4 carbon atoms, a phenylene group, or a divalent hydrocarbon group having 6 to 29 carbon atoms having 1 to 4 aromatic rings, and R¹ to R⁴ each independently represents a hydrogen atom, an alkyl group having 1 to 5 carbon atoms, an -NH₂ group, or a -NO₂ group.

In the formula (1), examples of the alkylene group having 2 to 4 carbon atoms, which is X, include an ethylene group, a propylene group, and a propane-2,2-diyl group. Examples of the divalent hydrocarbon group having 6 to 29 carbon atoms having 1 to 4 aromatic rings include a methylenebis(phenylene) group, a phenylenebis(methylene) group, and a phenoxyphenyl group. The aromatic ring may be bonded by -O-, -S-, -SS-, - SO₂-, and the like. Among the above X, a phenylene group or a hydrocarbon group having 8 to 17 carbon atoms having 1 or 2 aromatic rings is preferable, and a phenylene group or a hydrocarbon group having 8 to 13 carbon atoms having 1 or 2 aromatic rings is more preferable. In the formula (1), X may have a substituent. Examples of the substituent include an alkyl group having 1 to 3 carbon atoms, -NH₂, -NO₂, -F, -Cl, and -Br.

In the formula (1), examples of the alkyl group having 1 to 5 carbon atoms represented by R¹ to R⁴ include a methyl group, an ethyl group, and a propyl group. R¹ to R⁴ are preferably hydrogen atoms.

Suitable examples of the bismaleimide compound include 4,4'-diphenylmethane bismaleimide, m-phenylene bismaleimide, N,N'-1,2-ethylene bismaleimide, N,N'-1,2-propylene bismaleimide, bis(3-ethyl-5-methyl-4-maleimidophenyl)methane, 2,2'-bis[4-(4-maleimidophenoxy)phenyl]propane, m-phenylenebis(methylene)bismaleimide, m-phenylenebis(methylene)biscitraconimide, and 1,1'-(methylenedi-4,1-phenylene)bismaleimide. These bismaleimide compounds may be used alone or in combination of two or more.

Among the above, 4,4'-diphenylmethane bismaleimide and m-phenylene bismaleimide are preferable, and 4,4'-diphenylmethane bismaleimide is particularly preferable, from the viewpoint of the initial adhesion between the reinforcing material and the covering rubber.

The content of the bismaleimide compound in the rubber composition for covering rubber is preferably 0.05 parts by mass or more, more preferably 0.1 parts by mass or more, and still more preferably 0.3 parts by mass or more, with respect to 100 parts by mass of the rubber component. Further, it is preferably 5 parts by mass or less, more preferably 4 parts by mass or less, and still more preferably 3 parts by mass or less, with respect to 100 parts by mass of the rubber component. When the content of the bismaleimide compound is 0.05 parts by mass or more with respect to 100 parts by mass of the rubber component, the effect of improving the initial adhesion between the reinforcing material and the covering rubber is increased, and when the content is 5 parts by mass or less, the elastic modulus of the covering rubber can be increased, and the adhesiveness in moist and heat of the vulcanized rubber-metal composite can be improved.

### [Hexamethylene bisthiosulfate disodium salt dihydrate (HTS)]

The hexamethylene bisthiosulfate disodium salt dihydrate (HTS) is represented by the following formula (2).

NaO₃S-S-(CH₂)₆-S-SO₃Na·2H₂O (2)

The HTS contributes to improving the adhesion between the reinforcing material and the covering rubber.

The content of the HTS in the rubber composition for covering rubber is preferably 0.1 parts by mass or more, more preferably 0.3 parts by mass or more, and still more preferably 0.5 parts by mass or more, with respect to 100 parts by mass of the rubber component. Further, it is preferably 3.0 parts by mass or less, more preferably 2.5 parts by mass or less, and still more preferably 2 parts by mass or less, with respect to 100 parts by mass of the rubber component.

### [Phenolic resin]

The phenolic resin is obtained, for example, by the reaction of phenols and aldehydes. The phenolic resin contributes to improving the adhesion between the reinforcing material and the covering rubber.

Examples of the phenols as a raw material include phenol and cresol, and examples of the aldehydes as a raw material include formaldehyde. The phenolic resin may be a resol-type phenolic resin or a novolac-type phenolic resin. Further, the phenolic resin may be oil-modified, and examples of the oil include rosin oil, tall oil, cashew oil, oleic acid, linoleic acid, and linoleic acid.

The content of the phenolic resin in the rubber composition for covering rubber is preferably 1 part by mass or more, more preferably 2 parts by mass or more, and still more preferably 3 parts by mass or more, with respect to 100 parts by mass of the rubber component of the covering rubber. Further, it is preferably 15 parts by mass or less, more preferably 12 parts by mass or less, and still more preferably 10 parts by mass or less, with respect to 100 parts by mass of the rubber component of the covering rubber.

### [Methylene donor]

The methylene donor acts as a curing agent for the phenolic resin.

Examples of the methylene donor include hexamethoxymethylmelamine (HMMM), hexamethylenetetramine, and hexamethylmethylolmelamine.

The content of the methylene donor in the rubber composition for covering rubber is preferably 10 parts by mass or more, more preferably 20 parts by mass or more, and still more preferably 30 parts by mass or more, with respect to 100 parts by mass of the phenolic resin. Further, it is preferably 120 parts by mass or less, more preferably 100 parts by mass or less, and still more preferably 80 parts by mass or less, with respect to 100 parts by mass of the phenolic resin.

### [Antioxidant]

The antioxidant is not particularly limited, and examples thereof include amine-based, quinoline-based, quinone-based, phenol-based and imidazole-based compounds, and antioxidants such as metal carbamates.

Examples of the amine-based antioxidant include a phenylenediamine-based antioxidant having a phenylenediamine skeleton (-NH-Ph-NH-).

Specific examples thereof include N-(1,3-dimethylbutyl)-N'-phenyl-p-phenylenediamine (sometimes referred to as 6PPD), N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-dicyclohexyl-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, and phenyloctyl-p-phenylenediamine.

Among the above, it is preferably an amine-based antioxidant that has no double bond other than the phenylenediamine moiety (-NH-Ph-NH-). Specifically, it is preferable to use an amine-based antioxidant represented by the following formula (3) (R¹-NH-Ph-NH-R²).

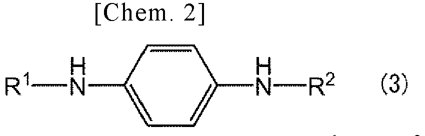

In the formula (3), R¹ and R² are each independently a monovalent saturated hydrocarbon group

R¹ and R² may be the same or different, but from the viewpoint of synthesis, they are preferably the same.

The number of carbon atoms of the monovalent saturated hydrocarbon group is preferably 1 to 20, more preferably 3 to 10, and particularly preferably 6 and 7. When the number of carbon atoms of the saturated hydrocarbon group is 20 or less, the number of moles per unit mass is large, so that the effect of aging prevention is increased, and the ozone resistance of the vulcanized rubber of the rubber composition for covering rubber is improved.

From the viewpoint of further improving the ozone resistance of the vulcanized rubber of the rubber composition for covering rubber, R¹ and R² in the formula (3) are preferably each independently a chain monovalent saturated hydrocarbon group having 1 to 20 carbon atoms or a cyclic monovalent saturated hydrocarbon group having 5 to 20 carbon atoms.

Examples of the monovalent saturated hydrocarbon group include an alkyl group and a cycloalkyl group, where the alkyl group may be linear or branched, and an alkyl group or the like may be further bonded to the cycloalkyl group as a substituent.

Examples of the alkyl group include a methyl group, an ethyl group, an n-propyl group, an isopropyl group, an n-butyl group, an isobutyl group, a sec-butyl group, a tert-butyl group, a 1,2-dimethylbutyl group, a 1,3-dimethylbutyl group, a 2,3-dimethylbutyl group, an n-pentyl group, an isopentyl group, a neopentyl group, a 1-methylpentyl group, a 2-methylpentyl group, a 3-methylpentyl group, a 4-methylpentyl group, a 1,2-dimethylpentyl group, a 1,3-dimethylpentyl group, a 1,4-dimethylpentyl group, a 2,3-dimethylpentyl group, a 2,4-dimethylpentyl group, a 3,4-dimethylpentyl group, an n-hexyl group, a 1-methylhexyl group, a 2-methylhexyl group, various octyl groups, various decyl groups, and various dodecyl groups, among which a 1,4-dimethylpentyl group is preferable.

Examples of the cycloalkyl group include a cyclopentyl group, a methylcyclopentyl group, a cyclohexyl group, a methylcyclohexyl group, a cycloheptyl group, and a cyclooctyl group, among which a cyclohexyl group is preferable.

The amine-based antioxidant represented by the formula (3) may be supported by any carrier. For example, the amine-based antioxidant represented by the formula (3) may be supported by an inorganic filler such as silica or calcium carbonate.

Further, the amine-based antioxidant represented by the formula (3) may form a masterbatch together with a rubber component. The rubber component used in forming the masterbatch is not particularly limited, and it may be diene-based rubber such as natural rubber (NR), or ethylene-propylene-diene rubber (EPDM), for example.

The amine-based antioxidant represented by the formula (3) may be a salt with an organic acid. The organic acid used when the amine-based antioxidant is used as a salt is not particularly limited, and examples thereof include stearic acid.

A quinoline-based antioxidant can also be suitably used, and examples of the quinoline-based antioxidant include a 2,2,4-trimethyl-1,2-dihydroquinoline polymer, and 6-ethoxy-2,2,4-trimethyl-1,2-dihydroquinoline.

The above-described antioxidants may be used alone or in combination of two or more.

The antioxidant preferably contains at least one selected from the group consisting of an amine-based antioxidant and a quinoline-based antioxidant and more preferably contains at least an amine-based antioxidant among those described above.

The rubber composition for covering rubber can be produced with a known method, and can be produced, for example, by blending a rubber component with N-cyclohexyl-2-benzothiazolylsulfenamide and, if necessary, various compounding agents appropriately selected, and performing kneading, warming, extruding, and other processes.

Further, a precursor of the reinforcement layer is obtained by covering the reinforcing material with the rubber composition for covering rubber. The obtained precursor (unvulcanized rubber-reinforcing material composite) is laminated together with other rubber members to form a green tire, and the green tire is vulcanized to obtain the tire of the present embodiment.

In accordance with the type of tire intended for use, the tire of the present embodiment may be obtained by first forming a tire using an unvulcanized rubber composition and then vulcanizing the tire, or by first forming a tire using semi-vulcanized rubber yielded by a preliminary vulcanization process or the like and then fully vulcanizing the tire. The tire of the present embodiment is preferably a pneumatic tire. As a gas with which the pneumatic tire is filled, an inert gas such as nitrogen, argon, or helium can be used as well as normal air or air whose oxygen partial pressure has been adjusted.

In the tire of the present embodiment, the content of cobalt atoms is preferably 1 % by mass or less. The content of cobalt atoms in the tire may be 0 % by mass if the rubber composition (including the rubber composition for covering rubber used to produce the covering rubber of the reinforcement layer) used to produce the tire does not contain a cobalt-containing compound and the metal of the reinforcing material does not contain cobalt. The content of cobalt atoms in the tire can be measured, for example, with a method of measuring the amount of an element in each member constituting the tire.

### EXAMPLES

### <Examples 1 to 2, and Comparative Examples 1 to 2>

### [Preparation of rubber composition]

According to the composition listed in Table 1, the components were kneaded using an ordinary Banbury mixer to prepare a rubber composition. Details of the components listed in Table 1 are as follows.
NR: natural rubber (polyisoprene-based rubber), TSR10
Carbon black: HAF, manufactured by Asahi Carbon Co., Ltd., product name "Asahi #70L" (nitrogen adsorption specific surface area = 81 m²/g)
Silica: manufactured by TOSOH SILICA CORPORATION, product name "Nipsil AQ" (CTAB specific surface area = 155 m²/g)
Phenolic resin: unmodified phenolic resin (phenol-formaldehyde resin), manufactured by Sumitomo Bakelite Co., Ltd., product name "SUMILITERESIN PR-50235"
Hexamethoxymethylmelamine: manufactured by ALLNEX, product name "CYREZ 964"
Cobalt organic acid: manufactured by OMG, product name "MANOBOND C"
Zinc white: manufactured by HAKUSUI TECH CO.,LTD., product name "Zinc Oxide JIS #2"
Stearic acid: manufactured by New Japan Chemical Co.,Ltd., product name "Stearic Acid 50S"
Antioxidant A: 2,2'-methylenebis(4-methyl-6-tert-butylphenol), manufactured by Ouchi Shinko Chemical Industrial Co., Ltd., product name "NOCRAC NS-6"
Antioxidant B: N-phenyl-N'-(1,3-dimethylbutyl)-p-phenylenediamine, manufactured by Ouchi Shinko Chemical Industrial Co., Ltd., product name "NOCRAC 6C"
Antioxidant C: manufactured by Seiko Chemical Corporation, product name "NONFLEX RD-S"
Sulfur: manufactured by Tsurumi Chemical Industry Co., ltd., product name "Powdered Sulfur"
Bismaleimide: N,N'-(4,4'-diphenylmethane) bismaleimide, manufactured by DAIWA KASEI INDUSTRIAL Co., Ltd., product name "BMI-RB"
Alkylphenol resin: alkylphenol formaldehyde resin, manufactured by SUMITOMO BAKELITE EUROPE, product name "DUREZ 19900"
Vulcanization accelerator DCBS: sulfenamide-based vulcanization accelerator, N,N-dicyclohexylbenzothiazyl-2-sulfenamide, manufactured by Ouchi Shinko Chemical Industrial Co., Ltd., product name "NOCCELER DZ"
Vulcanization accelerator CBS: sulfenamide-based vulcanization accelerator, N-cyclohexyl-2-benzothiazolylsulfenamide, manufactured by Ouchi Shinko Chemical Industrial Co., Ltd., product name "NOCCELER CZ-G"
HTS: manufactured by Flexis Co., Ltd., hexamethylene bisthiosulfate disodium salt dihydrate
Vulcanization retarder: N-cyclohexylthiophthalimide

### 1. Evaluation of covering rubber

The obtained rubber composition was subjected to high-temperature vulcanization and low-temperature vulcanization in the following manner, and the modulus under each set of vulcanization conditions was measured. The results are listed in Table 1.

### [Measurement of modulus of rubber composition at high-temperature vulcanization and low-temperature vulcanization]

A test piece obtained by vulcanizing the rubber composition at 170 °C for 8 minutes (high-temperature vulcanization) and a test piece obtained by vulcanizing the rubber composition at 145 °C for 40 minutes (low-temperature vulcanization) were prepared, respectively.

The test piece was subjected to a tensile test at room temperature (25 °C) according to JIS K6251:2017, and the modulus at 50 % elongation (Mod50, tensile stress at 50 % elongation) was measured.

### 2. Evaluation of tire

### [Preparation of precursor of reinforcement layer]

A steel cord whose surface is covered with a ternary plating of copper, zinc and iron and which contains about 1 % by mass of iron can be used as the metal (reinforcing material). This ternary plated steel cord is obtained using Set-D dies, and more specifically, it is produced with the method described in paragraphs [0065] to [0070] of WO/2020/156967.

The ternary plated steel cord is covered with the prepared rubber composition to obtain a precursor of the reinforcement layer.

### [Production of tire]

A green tire is molded using the precursor (unvulcanized rubber-reinforcing material composite) for a reinforcement layer of a belt. Further, the green tire is heated until the thickest portion of the tire is sufficiently vulcanized to prepare a tire for passenger vehicle having a tire size of 155/65R14 and having the structure illustrated in FIG. 1.

The modulus of the covering rubber of the reinforcement layer of the obtained tire is measured with the following method.

### [Measurement of modulus of covering rubber of reinforcement layer of tire]

The belt (reinforcement layer) is taken out from the tire, and a test piece is prepared using the covering rubber portion of each the central portion of the belt (reinforcement layer) in the tire width direction and the end portion of the belt (reinforcement layer) in the tire width direction.

The test piece is subjected to a tensile test at room temperature (25 °C) according to JIS K6251:2017, and the modulus at 50 % elongation (Mod50, tensile stress at 50 % elongation) is measured. Each test is conducted four times, and the average value is listed in Table 1.

### [Evaluation of productivity]

A tire having a ratio (a/b) of the modulus (a) at 50 % elongation of the covering rubber of the central portion of the belt (reinforcement layer) in the tire width direction and the modulus (b) at 50 % elongation of the covering rubber of the end portion in the tire width direction of 0.94 or more and 1.06 or less is evaluated as having good productivity (O), and a tire having a ratio (a/b) of less than 0.94 or a ratio (a/b) of more than 1.06 is evaluated as having poor productivity (×)

### [Table 1]

**Table 1**

| | | | | Comparative Example 1 | Comparative Example 2 | Example 1 | Example 2 |
|---|---|---|---|---|---|---|---|
| | NR | | Part by mass | 100 | 100 | 100 | 100 |
| | Carbon black | | Part by mass | 53 | 40 | 57 | 52 |
| | Silica | | Part by mass | - | 8 | - | - |
| | Phenolic resin | | Part by mass | - | 5 | - | - |
| | Hexamethoxymethylmelamine | | Part by mass | - | 2.5 | - | - |
| | Cobalt organic acid | | Part by mass | 0.9 | 0.9 | - | - |
| | Zinc white | | Part by mass | 7.5 | 7.5 | 7.5 | 7.5 |
| | Stearic acid | | Part by mass | 0.5 | 0.5 | 1.3 | 1.3 |
| Composition of rubber composition for covering rubber | Antioxidant A | | Part by mass | 2 | 2 | - | - |
| | Antioxidant B | | Part by mass | 1.5 | 1.5 | 1.5 | 1.5 |
| | Antioxidant C | | Part by mass | 0.7 | 0.7 | 0.7 | 0.7 |
| | Sulfur | | Part by mass | 6 | 6 | 6 | 6 |
| | Bismaleimide | | Part by mass | 0.8 | 0.8 | 1.2 | 2 |
| | Alkylphenol resin | | Part by mass | - | - | 1 | 1 |
| | Vulcanization accelerator DCBS | | Part by mass | 1.2 | 1.2 | - | - |
| | Vulcanization accelerator CBS | | Part by mass | - | - | 0.92 | 0.92 |
| | HTS | | Part by mass | - | - | - | 1 |
| | Vulcanization retarder | | Part by mass | 0.1 | 0.1 | 0.2 | 0.2 |
| Evaluation of covering rubber | MOD50 | High-temperature vulcanization | MPa | 1.69 | 1.92 | 2.15 | 2.35 |
| | | Low-temperature vulcanization | MPa | 2.63 | 2.64 | 2.05 | 2.06 |
| Evaluation of tire | MOD50 | Belt central portion a | MPa | 1.95 | 1.71 | 1.77 | 1.63 |
| | | Belt end portion b | MPa | 2.14 | 2 | 1.88 | 1.7 |
| | | a/b | - | 0.911 | 0.855 | 0.941 | 0.959 |
| | Productivity | | - | × | × | ○ | ○ |

According to Table 1, it is understood that the tire of the embodiment according to the present disclosure is excellent in productivity because the difference in the modulus of the covering rubber is small between the central portion in the tire width direction and the end portion in the tire width direction of the reinforcement layer, and vulcanization can be performed at high temperatures for a short time without deteriorating the performance of the tire.

### REFERENCE SIGNS LIST

- 1: bead portion
- 2: sidewall portion
- 3: tread portion
- 4: bead core
- 5: carcass
- 6: belt
- 6a, 6b: reinforcement layer
- 6C: the central portion of the reinforcement layer in the tire width direction
- 6E: the end portion of the reinforcement layer in the tire width direction
- W: the maximum width of the reinforcement layer in the tire width direction

## Claims

1. A tire comprising a reinforcement layer (6a, 6b) comprising a reinforcing material and a vulcanized rubber covering the reinforcing material, wherein
the vulcanized rubber is a vulcanized rubber of a rubber composition containing N-cyclohexyl-2-benzothiazolylsulfenamide,
the content of N-cyclohexyl-2-benzothiazolylsulfenamide is 0.4 parts by mass or more and 3 parts by mass or less with respect to 100 parts by mass of the rubber component,
the reinforcing material contains a metal where a steel cord surface is covered with a ternary plating of copper, zinc, and iron,
the reinforcement layer (6a, 6b) is arranged on the inside of a tread surface in a tire radial direction, and
a ratio (a/b) of a modulus (a) at 50 % elongation of the vulcanized rubber covering the reinforcing material in a central portion of the reinforcement layer in a tire width direction (6C), measured by a tensile test at room temperature (25 °C) according to JIS K6251:2017, and a modulus (b) at 50 % elongation of the vulcanized rubber covering the reinforcing material in an end portion of the reinforcement layer in a tire width direction (6E), measured by a tensile test at room temperature (25 °C) according to JIS K6251:2017, is 0.94 or more and 1.06 or less.

2. The tire according to claim 1, wherein an amount of the iron in the covering is 1 % by mass or more and less than 10 % by mass of a total mass of the copper, the zinc, and the iron.

3. The tire according to claim 1 or 2, wherein an amount of phosphorus in the covering is more than 0 mg/m² and 4 mg/m² or less.

4. The tire according to any one of claims 1 to 3, wherein the steel cord is drawn by diamond dies.

5. The tire according to any one of claims 1 to 4, wherein the rubber composition contains a rubber component containing 50 % by mass or more of a polyisoprene-based rubber.

6. The tire according to any one of claims 1 to 5, wherein the rubber composition has a cobalt-containing compound content of 0.01 % by mass or less.

7. The tire according to any one of claims 1 to 6, wherein the rubber composition contains an alkylphenol resin.

8. The tire according to any one of claims 1 to 7, wherein a content of cobalt atoms is 1 % by mass or less.

## Patentansprüche

1. Reifen umfassend eine Verstärkungsschicht (6a, 6b), die ein Verstärkungsmaterial und einen das Verstärkungsmaterial bedeckenden vulkanisierten Kautschuk umfasst, wobei
der vulkanisierte Kautschuk ein vulkanisierter Kautschuk aus einer Kautschukzusammensetzung ist, die N-Cyclohexyl-2-benzothiazolylsulfenamid enthält,
der Gehalt an N-Cyclohexyl-2-benzothiazolylsulfenamid bezogen auf 100 Masseteile der Kautschukkomponente 0,4 Masseteile oder mehr und 3 Masseteile oder weniger beträgt,
das Verstärkungsmaterial ein Metall enthält, wobei eine Stahlcordfläche mit einer Dreierplattierung aus Kupfer, Zink und Eisen überzogen ist,
die Verstärkungsschicht (6a, 6b) auf der Innenseite einer Lauffläche in radialer Richtung des Reifens angeordnet ist, und
ein Verhältnis (a/b) aus einem Modul (a) bei 50 % Dehnung des vulkanisierten Kautschuks, der das Verstärkungsmaterial in einem mittigen Abschnitt der Verstärkungsschicht in Reifenbreitenrichtung (6C) bedeckt, gemessen mit einem Zugversuch bei Raumtemperatur (25 °C) gemäß JIS K6251:2017, und einem Modul (b) bei 50 % Dehnung des vulkanisierten Kautschuks, der das Verstärkungsmaterial in einem Endabschnitt der Verstärkungsschicht in Reifenbreitenrichtung (6E) bedeckt, gemessen mit einem Zugversuch bei Raumtemperatur (25 °C) gemäß JIS K6251:2017, 0,94 oder mehr und 1,06 oder weniger beträgt.

2. Reifen nach Anspruch 1, wobei eine Menge an Eisen in der Abdeckung mindestens 1 Masse-% und weniger als 10 Masse-% der Gesamtmasse von Kupfer, Zink und Eisen beträgt.

3. Reifen nach Anspruch 1 oder 2, wobei eine Menge an Phosphor in der Abdeckung mehr als 0 mg/m² und höchstens 4 mg/m² oder weniger beträgt.

4. Reifen nach einem der Ansprüche 1 bis 3, wobei der Stahlcord mittels Diamantziehwerkzeugen gezogen wird.

5. Reifen nach einem der Ansprüche 1 bis 4, wobei die Kautschukzusammensetzung eine Kautschukkomponente mit einem Gehalt von 50 Masse-% oder mehr von einem Kautschuk auf Polyisoprenbasis enthält.

6. Reifen nach einem der Ansprüche 1 bis 5, wobei die Kautschukzusammensetzung eine kobalthaltige Verbindung mit einem Gehalt von 0,01 Masse-% oder weniger aufweist.

7. Reifen nach einem der Ansprüche 1 bis 6, wobei die Kautschukzusammensetzung ein Alkylphenolharz enthält.

8. Reifen nach einem der Ansprüche 1 bis 7, wobei ein Gehalt an Kobaltatomen 1 Masse-% oder weniger beträgt.

## Revendications

1. Pneu comprenant une couche de renforcement (6a, 6b) comprenant un matériau de renforcement et un caoutchouc vulcanisé recouvrant le matériau de renforcement, dans lequel
le caoutchouc vulcanisé est un caoutchouc vulcanisé composé d'une composition de caoutchouc contenant du N-cyclohexyl-2-benzothiazolylsulfénamide,
la teneur en N-cyclohexyl-2-benzothiazolylsulfénamide est de 0,4 partie en masse ou plus et de 3 parties en masse ou moins par rapport à 100 parties en masse du composant en caoutchouc,
le matériau de renforcement contient un métal où une surface de câble d'acier est revêtue d'un placage ternaire de cuivre, de zinc et de fer,
la couche de renforcement (6a, 6b) est agencée à l'intérieur d'une surface de bande de roulement dans un sens radial du pneu, et
un ratio (a/b) d'un module (a) à 50 % d'allongement du caoutchouc vulcanisé recouvrant le matériau de renforcement dans la partie centrale de la couche de renforcement, dans le sens de la largeur du pneu (6C), mesuré par un essai de traction à température ambiante (25°C) conformément à la norme JIS. K6251:2017, et un module (b) à 50 % d'allongement du caoutchouc vulcanisé recouvrant le matériau de renforcement, au niveau d'une partie d'extrémité de la couche de renforcement dans le sens de la largeur du pneu (6E), a été mesuré par un essai de traction à température ambiante (25°C) conformément à la norme JIS. K6251:2017, est de 0,94 ou plus et de 1,06 ou moins.

2. Pneu selon la revendication 1, dans lequel une quantité de fer dans le revêtement est de 1 % en masse ou plus et moins de 10 % en masse par rapport à une masse totale du cuivre, du zinc et du fer.

3. Pneu selon la revendication 1 ou 2, dans lequel une quantité de phosphore dans le revêtement est supérieure à 0 mg/m² et inférieure à 4 mg/m².

4. Pneu selon l'une quelconque des revendications 1 à 3, dans lequel le câble d'acier est étiré par des matrices en diamant.

5. Pneu selon l'une quelconque des revendications 1 à 4, dans lequel la composition de caoutchouc contient un composant de caoutchouc contenant 50 % en masse ou plus d'un caoutchouc à base de polyisoprène.

6. Pneu selon l'une quelconque des revendications 1 à 5, dans lequel la composition du caoutchouc présente une teneur en composé contenant du cobalt de 0,01 % en masse ou moins.

7. Pneu selon l'une quelconque des revendications 1 à 6, dans lequel la composition de caoutchouc contient une résine alkylphénol.

8. Pneu selon l'une quelconque des revendications 1 à 7, dans lequel une teneur en atomes de cobalt est de 1 % en masse ou moins.
